# EUROPÄISCHE PATENTSCHRIFT

(11) **EP 2 019 943 B1**
(45) Veröffentlichungstag und Bekanntmachung des Hinweises auf die Patenterteilung: **02.09.2009**
(21) Anmeldenummer: 07729354.6
(22) Anmeldetag: 22.05.2007
(51) Int. Cl.: F16L 23/06

(54) **VORRICHTUNG ZUM VERBINDEN ZWEIER MIT FLANSCHEN VERSEHENER ROHR- ODER SCHLAUCHENDEN**
MECHANISM FOR CONNECTING TWO FLANGED PIPE ENDS OR TUBE ENDS
DISPOSITIF PERMETTANT D'ASSEMBLER DEUX EXTREMITES DE TUBE OU DE TUYAUX A BRIDES

(30) Priorität: 22.05.2006 DE 102006023902
(43) Veröffentlichungstag der Anmeldung: 04.02.2009
(73) Patentinhaber: Weinhold, Karl Dipl.-Ing. (FH), D-41464 Neuss (DE)
(72) Erfinder: Weinhold, Karl Dipl.-Ing. (FH), D-41464 Neuss (DE)
(74) Vertreter: Cohausz & Florack
(86) Internationale Anmeldenummer: PCT/EP2007/054912
(87) Internationale Veröffentlichungsnummer: WO 2007/135138

(56) Entgegenhaltungen:
- EP-A2- 0 195 914
- DE-B- 1 245 656
- FR-A- 2 076 914

## Beschreibung

Die Erfindung betrifft eine Vorrichtung zum Verbinden freier mit Flanschen versehener Rohr- oder Schlauchenden,' mit mehreren gelenkig miteinander verbundenen Schellensegmenten mit im wesentlichen U-förmigem Querschnitt, einem endseitig an einem freien Ende eines Schellensegmentes angeordneten Spannhebel und einer Feder, wobei die Schellensegmente die Flansche der zusammengeschobenen Rohr- oder Schlauchenden übergreifen und wobei die freien Enden des ersten und des letzten Schellensegments mittels Spannhebels und Feder verriegelbar sind.

Solche Vorrichtungen, kurz als Rohr- oder Schlauchkupplung oder auch Rohr- oder Schlauchschelle bezeichnet, sind seit langem in unterschiedlichsten Ausführungen bekannt. Sie bestehen im einfachsten Fall aus einer zwei Schellensegmente aufweisenden Schelle, wobei die beiden Schellensegmente an jeweils einem Ende gelenkig über einen Bolzen miteinander verbunden sind (EP 0 195 914 A2). Zum Verschließen wird dann die geöffnete Schelle über die Flansche der aneinander geschobenen Rohrenden oder entsprechend über Ringbunde von Schlauchtüllen gelegt, wobei die Seitenteile der Schellensegmente die Flansche/Ringbunde außen umgreifen und ein axiales Auseinanderschieben (Öffnen) der Rohr- bzw. Schlauchenden zuverlässig verhindern.

Um zum Verschließen zeitaufwendige Verschraubungen zu vermeiden, sind die bekannten Rohr- bzw. Schlauchkupplungen als sog. Schnellkupplungen ausgeführt. Dazu ist ein Spannhebel vorgesehen, welcher mittels eines Gelenkbolzens im freien Endbereich eines Schellensegments befestigt ist, während ein nächster Gelenkbolzen zur Befestigung des einen Endes wenigstens einer Feder dient. Mit ihrem anderen Ende ist die wenigstens eine Feder in einer Aussparung des anderen Schellensegments eingehakt. Die Gelenkbolzen sind jeweils mit Hilfe von Muttern verschraubt.

Obwohl die bekannten Rohr- oder Schlauchkupplungen seit langem und mit großem Erfolg eingesetzt werden, gibt es Anwendungsbereiche, in denen die Funktion der Rohr- oder Schlauchkupplung gefährdet sein kann. Längt sich die Feder aus irgendeinem Grund, kann dies zu einem selbsttätigen Öffnen der Schelle führen, wobei es unter Umständen zu einer unkontrollierten Zerstörung der Schelle kommen kann. Dies kann beispielsweise dann auftreten, wenn eine bekannte Rohrkupplung in der Nähe von Warmbereichen eingesetzt wird oder wenn heißes Schlackematerial in der Nähe von Öfen über diese Rohrkupplung fällt und zum Verlust der Spannkraft der Feder/n führt.

Der Erfindung liegt daher die Aufgabe zugrunde, die eingangs genannte und zuvor näher beschriebene Vorrichtung zum Verbinden zweier Rohr- oder Schlauchenden so auszugestalten und weiterzubilden, dass ein selbsttätiges Öffnen der geschlossenen Vorrichtung unter allen Umständen ausgeschlossen ist. Weiterhin ist erwünscht, dass der einfache und kostengünstige Aufbau sowie die einfache Handhabbarkeit der Vorrichtung erhalten bleiben.

Die Aufgabe wird erfindungsgemäß bei einer Vorrichtung gemäß dem Oberbegriff von Anspruch 1 dadurch gelöst, dass der Spannhebel formschlüssig mit dem freien Ende des benachbarten Schellensegments verbindbar ist und dass der Spannhebel in gespannter Stellung verrastbar ist.

Die Erfindung hat erkannt, dass durch eine zusätzliche formschlüssige Verbindung der freien Enden der Schellensegmente eine dauerhafte Sicherung erreicht werden kann, selbst wenn die wenigstens eine Feder aus irgendwelchen Gründen ihre Aufgabe nicht mehr erfüllen kann. Gleichzeitig wird verhindert, dass sich der Spannhebel im geschlossenen Zustand ebenfalls nicht selbsttätig öffnen kann.

Gemäß einer weiteren Lehre der Erfindung sind die Schellensegmente und der Spannhebel aus Stahlblechteilen gefertigt und der Spannhebel ist im Bereich seiner gelenkigen Verbindung mit dem Schellensegment hakenförmig ausgebildet, so dass er mit korrespondierenden Vorsprüngen des freien Endes des benachbarten Schellensegmentes verhakt werden kann. Durch die hakenförmige Auslegung des Spannhebels und die formschlüssige Verbindung mit den Vorsprüngen des anderen Schellensegments werden eventuell auftretende Radialkräfte übernommen, sollte/n die Feder/n ihre Spannung verlieren.

Gemäß einer weiteren bevorzugten Ausgestaltung der Erfindung werden die mit den Haken des Spannhebels korrespondierenden Vorsprünge von den Enden eines Bolzens gebildet, der in zwei Bohrungen in den Seitenteilen des freien Endes des anderen Schellensegments gelagert ist. Besonders bevorzugt ist der Bolzen gegen axiale Bewegung gesichert. Dazu weist dieser in weiterer Ausbildung wenigstens eine Eindrehung auf, und ist im Bereich der Eindrehung formschlüssig mit dem Schellensegment verbunden. Dies kann beispielsweise durch einen aus dem Schellensegment herausragenden Steg geschehen.

Eine herstellungstechnisch besonders elegante Ausgestaltung der Erfindung sieht vor, dass zwischen den Bohrungen in den Seitenteilen des Schellensegments ein Rohr angeordnet ist, das so lang ist wie der lichte Abstand zwischen den Bohrungen und welches im Bereich der Eindrehung des Bolzens mittels Quetschen an den Bolzen angedrückt ist. Auf diese Weise muss keine weitere Veränderung am Schellensegment vorgenommen werden.

Eine weitere Lehre der Erfindung sieht vor, dass der Spannhebel an seinem freien Ende ein bewegbares Rastelement aufweist, welches in gespanntem Zustand des Spannhebels formschlüssig mit dem Schellensegment verbindbar ist. Dabei kann bevorzugt zur Sicherung des bewegbaren Elements aus dem Schellensegment ein Zapfen herausgebogen sein, welcher eine Hinterschneidung oder eine Bohrung zur Aufnahme des Rastelements aufweist.

Um auch hier eine Verschraubung möglichst zu vermeiden, sollte das Rastelement einfach zu bedienen sein. Dazu sieht eine weitere Ausgestaltung der Erfindung vor, dass das Rastelement als federbelasteter Schließmechanismus ausgeführt ist.'Durch eine entsprechend abgeschrägte Form des einen Endes des Rastelements erfolgt beim Umlegen des Spannhebels in den gespannten Zustand ein "automatisches" Verriegeln des Rastelements mit dem darunter befindlichen Schellensegment.

Um nun die erfindungsgemäße Vorrichtung wieder öffnen zu können, weist nach einer weiteren Ausgestaltung der Erfindung das Rastelement eine Bedienungshandhabe auf, welche bevorzugt als gelenkig am Rastelement angeordneter Ring ausgebildet ist. Durch Ziehen am Ring entgegen der Federkraft wird das verriegelte Ende des Rastelements entriegelt und so ein Öffnen des Spannhebels ermöglicht.

Die Erfindung wird nachfolgend anhand einer lediglich ein bevorzugtes Ausführungsbeispiel einer Rohrkupplungsschelle darstellenden Zeichnung näher erläutert. In der Zeichnung zeigen:
- Fig. 1: die erfindungsgemäße Vorrichtung in geschlossenem Zustand in Seitenansicht,
- Fig. 2: einen Teil der Vorrichtung in Draufsicht in Richtung des Pfeiles II aus Fig. 1, wobei zum besseren Verständnis die Feder aufgebrochen dargestellt ist,
- Fig. 3: die erfindungsgemäße Vorrichtung in entriegelter Stellung,
- Fig. 4: die erfindungsgemäße Vorrichtung in teilweise geöffneter Stellung und
- Fig. 5: die erfindungsgemäße Vorrichtung in einer Seitenansicht/Schnittdarstellung senkrecht zur Längsachse.

Die beispielhaft dargestellte Kupplung ist eine Rohrkupplung zum Verbinden zweier mit Flanschen 1 versehener Rohrenden 2. Im vorliegenden Ausführungsbeispiel besteht die erfindungsgemäße Vorrichtung aus vier gelenkig miteinander verbundenen Schellensegmenten 3A, 3B, 3C, 3D und einem Verschluss, der aus einem Spannhebel 4 und einer Feder 5 gebildet ist.

Die Schellensegmente 3A, 3B, 3C, 3D sind untereinander durch Gelenkbolzen 6 gelenkig miteinander verbunden, wobei die Gelenkbolzen 6 an ihren Enden mit Hilfe von Muttern 7 verschraubt sind. Der Spannhebel 4 ist mittels einem weiteren Gelenkbolzen 8 am freien Ende eines Schellensegmentes 3A befestigt, während ein weiterer Gelenkbolzen 9 zur Befestigung des einen Endes der Feder 5 dient. Mit ihrem anderen Ende ist die Feder 5 in einer Aussparung 10 am (gegenüberliegenden) freien Ende des Schellensegments 3D eingehakt. Die Gelenkbolzen 8 und 9 sind ebenfalls jeweils mit Hilfe von Muttern 7 verschraubt.

Es versteht sich, dass die erfindungsgemäße Kupplungsschelle auch aus einer anderen Anzahl von Schellensegmenten bestehen kann. Im einfachsten Fall sind - wie beim Stand der Technik - nur zwei Schellensegmente vorhanden, je nach Rohrdurchmesser bietet es sich jedoch an, die Anzahl der einzelnen Schellensegmente zu erhöhen.

Die Schellensegmente 3A, 3B, 3C, 3D haben an ihren beiden Seiten jeweils ein nach innen ragendes, nicht näher bezeichnetes Seitenteil, so dass die Schellensegmente 3A, 3B, 3C, 3D einen U-förmigen Querschnitt aufweisen. Die Seitenteile der Schellensegmente 3A, 3B, 3C, 3D umgreifen die Flansche 1 der Rohrenden 2 dabei von außen.

Während beim Stand der Technik die Verbindung der freien Enden der Schellensegmente nur von der Feder übernommen wird, ist erfindungsgemäß vorgesehen, dass der Spannhebel 4 formschlüssig mit dem freien Ende des benachbarten Schellensegments 3D verbindbar ist und in seiner gespannten Stellung verrastbar ist. Dazu ist der Spannhebel 4 im Bereich seiner gelenkigen Verbindung mit dem Schellensegment 3A hakenförmig ausgebildet. Im dargestellten und insoweit bevorzugten Ausführungsbeispiel weist er zwei Haken 11 auf, welche mit korrespondierenden Vorsprüngen des freien Endes des benachbarten Schellensegments 3D verhakbar sind.

Im Ausführungsbeispiel werden die Vorsprünge von Enden eines Bolzens 12 gebildet, der in zwei nicht näher bezeichneten Bohrungen in den Seitenteilen des freien Endes des Schellensegments 3D gelagert ist.

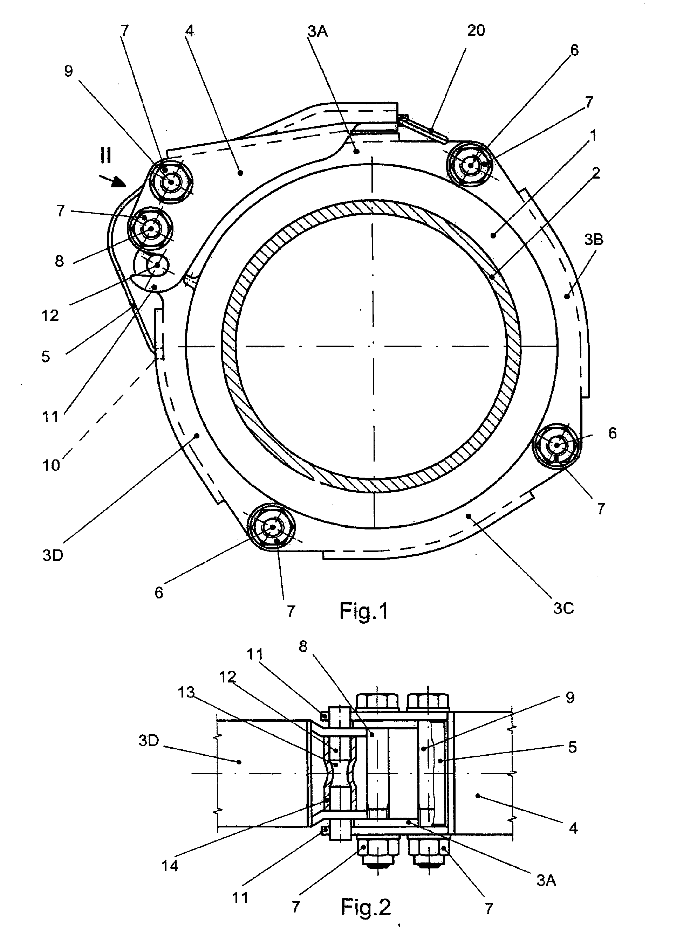

In der Draufsicht gemäß Fig. 2, bei der zur besseren Übersicht die Feder 5, welche die Gelenkbolzen 8 und 9 sowie den Bolzen 12 sonst überdeckt, aufgebrochen dargestellt ist, ist der Bolzen 12 besser zu erkennen. Man sieht, dass der Bolzen 12 eine zentrale Eindrehung 13 aufweist. Diese Eindrehung 13 dient zur axialen Festlegung des Bolzens 12 in den Bohrungen des Schellensegments 3D. Dazu ist zwischen den Bohrungen des Schellensegments 3D ein Rohr 14 angeordnet, welches so lang ist wie der lichte Abstand zwischen den Bohrungen und welches im Bereich der Eindrehung 13 des Bolzens 12 mittels Quetschen an den Bolzen 12 angedrückt ist, so dass dieser in seiner Lage fixiert ist.

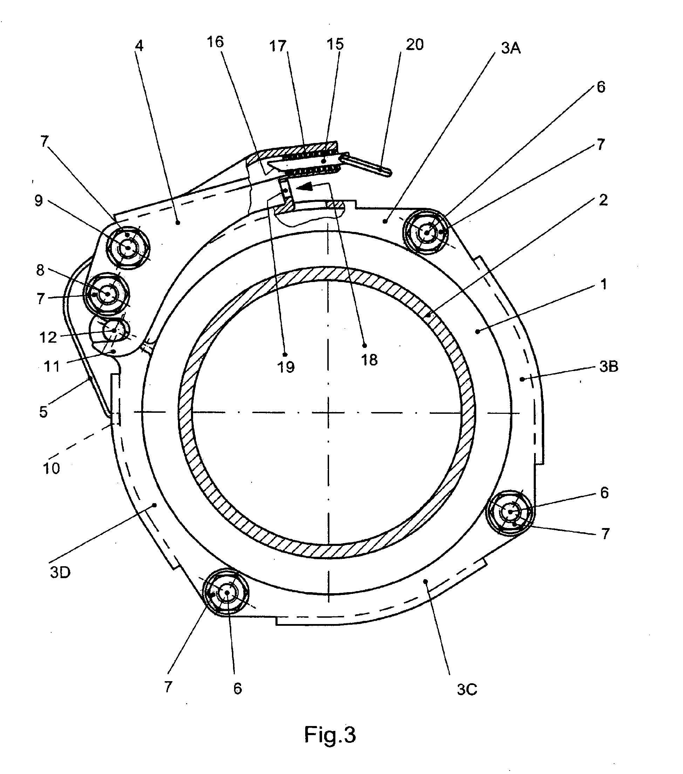

Wie bereits oben erläutert, zeichnet sich die Erfindung auch dadurch aus, dass der Spannhebel 4 in seiner gespannten Stellung verrastbar ist. Dazu weist der Spannhebel 4 an seinem freien Ende ein bewegbares Rastelement 15 auf, welches in gespanntem Zustand des Spannhebels 4 formschlüssig mit dem Schellensegment 3A verbunden ist. Seine Funktion lässt sich besonders deutlich Fig. 3 entnehmen. Dort ist erkennbar, dass das Rastelement 15 eine Schrägfläche 16 aufweist und in einer Feder 17 gelagert ist. Aus dem Schellensegment 3A ist ein Zapfen 18 herausgebogen, welcher eine Bohrung 19 zur Aufnahme des Rastelements 15 aufweist. Beim Verschließen des Spannhebels 4 bewirkt die spezielle geometrische Ausgestaltung ein "automatisches" Verrasten, indem das federbelastete Rastelement 15 wie eine Türfalle mit der Bohrung 19 des Schellensegments 3A zusammenwirkt. Zum leichteren Entriegeln weist das Rastelement 15 eine Bedienungshandhabe auf, welche im dargestellten und insoweit bevorzugten Ausführungsbeispiel aus einem gelenkig am Rastelement 15 angeordneten Ring 20 besteht. In der in Fig. 3 dargestellten entriegelten Stellung wird der Spannhebel 4 immer noch durch die Federwirkung flach über dem Schellensegment 3A gehalten.

Auch wenn zuvor beschrieben wurde, dass im dargestellten und insofern bevorzugten Ausführungsbeispiel das bewegbare Rastelement am Spannhebel befestigt ist, ist es im Rahmen der Erfindung ebenfalls denkbar, dass das Rastelement am Schellensegment 3A befestigt sein kann und die Ausklinkung zum Einrasten des Rastelements im Spannhebel 4 ausgeführt ist.

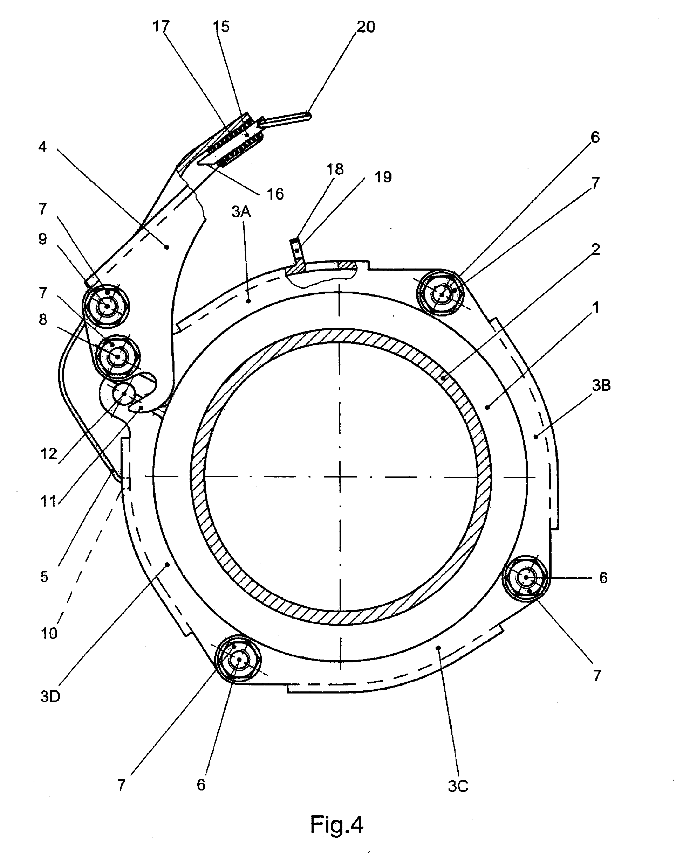

Fig. 4 zeigt nun die erfindungsgemäße Vorrichtung beim Öffnungsvorgang. Dazu wird der entriegelte Spannhebel 4 angehoben, so dass sich die Haken 11 vom Bolzen 12 lösen können und die Kupplungsschelle über die Flansche 1 der Rohrenden 2 gestreift werden kann. Bei gebrochener oder zerstörter Feder 5 fallen zwar die nunmehr freien Enden der Schellensegmente 3A und 3D auseinander, jedoch können sich keine weiteren Teile lösen.

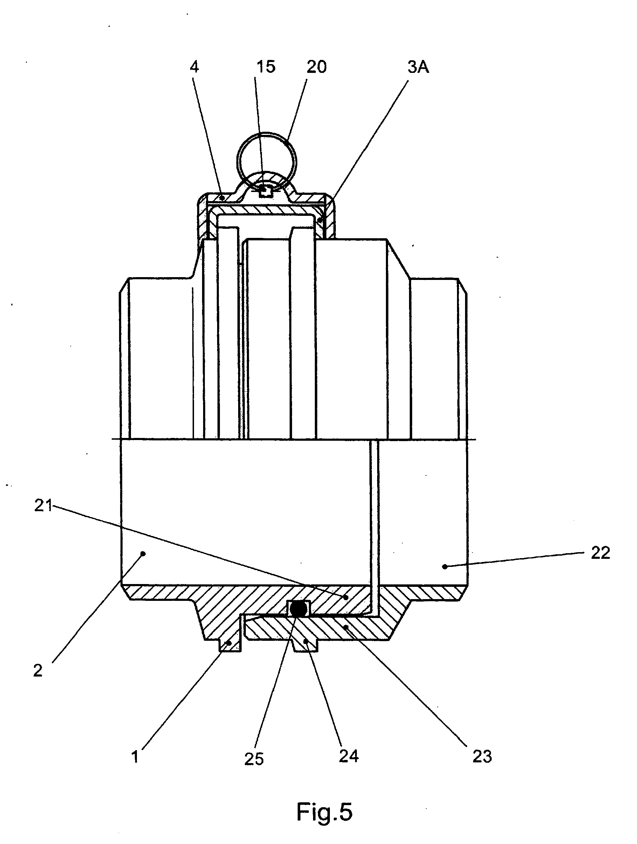

Schließlich ist in Fig. 5 die erfindungsgemäße Vorrichtung in einer Seitenansicht bzw. Schnittdarstellung senkrecht zur Längsachse der Rohre dargestellt. Hierbei ist erkennbar, dass die erfindungsgemäße Vorrichtung auch für solche Rohre geeignet ist, welche ohne Querschnittsverlust zusammensteckbar sind. Dazu weist das bereits angesprochene Rohrende 2 ein Steckteil 21 und ein anderes Rohrende 22 eine Muffe 23 auf, welche ineinander schiebbar sind. So wie das Rohrende 2 einen Flansch 1 aufweist, weist auch das Rohrende 22 bzw. dessen Muffe 23 einen Flansch 24 auf. Die Flansche 1 bzw. 24 werden, wie im oberen Teil von Fig. 5 ersichtlich, vom U-förmigen Querschnitt der Schellensegmente, von denen nur das Schellensegment 3A dargestellt ist, seitlich umgriffen, um die Kupplung zu schließen. Dabei sorgt eine in einer nicht näher bezeichneten Ausnehmung des Steckteils 21 angeordnete Dichtung 25 für eine zuverlässig dichte Verbindung, wobei die Dichtung 25 im wesentlichen vor Staub und Umwelteinflüssen geschützt ist.

Auch wenn im Ausführungsbeispiel nur eine Rohrkupplungsschelle dargestellt ist, eignet sich die erfindungsgemäße Vorrichtung auch zum Verbinden von Schlauchenden, wenn in diese entsprechende Tüllen mit Flanschen eingeschoben sind. Dabei können die Seitenteile der Schellensegmente die Schlauchenden radial auf die Tüllen pressen, so dass eine sichere Verbindung gewährleistet ist.

## Patentansprüche

1. Vorrichtung zum Verbinden freier mit Flanschen versehener Rohr- oder Schlauchenden (2, 22), mit mehreren gelenkig miteinander verbundenen Schellensegmenten (3A, 3B, 3C, 3D) mit im wesentlichen U-förmigem Querschnitt, einem endseitig an einem freien Ende eines Schellensegmentes (3A) gelenkig angeordneten Spannhebel (4) und wenigstens einer Feder (5), wobei die Schellensegmente (3A, 3B, 3C, 3D) die Flansche der zusammengeschobenen Rohr- oder Schlauchenden (2, 22) außen übergreifen und wobei die freien Enden des ersten und des letzten Schellensegments (3A und 3D) mittels Spannhebel (4) und Feder/n (5) verriegelbar sind,
**dadurch gekennzeichnet, dass** der Spannhebel (4) im Bereich seiner gelenkigen Verbindung formschlüssig mit dem freien Ende des benachbarten Schellensegments (3D) verbindbar und dass der Spannhebel in gespannter Stellung verrastbar ist.

2. Vorrichtung nach Anspruch 1,
**dadurch gekennzeichnet, dass** die Schellensegmente (3A, 3B, 3C, 3D) und der Spannhebel (4) aus Stahlblechteilen gefertigt sind und dass der Spannhebel im Bereich seiner gelenkigen Verbindung mit dem Schellensegment (3A) hakenförmig ausgebildet ist und mit korrespondierenden Vorsprüngen des freien Endes des benachbarten Schellensegments (3D) verhakbar ist.

3. Vorrichtung nach Anspruch 2,
**dadurch gekennzeichnet, dass** dass die Vorsprünge von Enden eines Bolzens (12) gebildet werden, der in zwei Bohrungen in den Seitenteilen des freien Endes des Schellensegments (3D) gelagert ist.

4. Vorrichtung nach Anspruch 3,
**dadurch gekennzeichnet, dass** der Bolzen (12) gegen axiale Bewegung gesichert ist.

5. Vorrichtung nach Anspruch 3 oder 4,
**dadurch gekennzeichnet, dass** der Bolzen (12) wenigstens eine Eindrehung (13) aufweist und im Bereich der Eindrehung (13) formschlüssig mit dem Schellensegment (3D) verbunden ist.

6. Vorrichtung nach den Ansprüchen 3 und 5,
**dadurch gekennzeichnet, dass** zwischen den Bohrungen des Schellensegments (3D) ein Rohr (14) angeordnet ist, das so lang ist wie der lichte Abstand zwischen den Bohrungen und das im Bereich der Eindrehung (13) des Bolzens (12) mittels Quetschen an den Bolzen (12) angedrückt ist.

7. Vorrichtung nach einem der Ansprüche 1 bis 6,
**dadurch gekennzeichnet, dass** der Spannhebel (4) an seinem freien Ende ein bewegbares Rastelement (15) aufweist, welches in gespanntem Zustand des Spannhebels (4) formschlüssig mit dem Schellensegment (3A) verbunden ist.

8. Vorrichtung nach Anspruch 7,
**dadurch gekennzeichnet, dass** aus dem Schellensegment (3A) ein Zapfen (18) herausgebogen ist, welcher eine Hinterschneidung oder eine Bohrung (19) zur Aufnahme des Rastelements (15) aufweist.

9. Vorrichtung nach Anspruch 7 oder 8,
**dadurch gekennzeichnet, dass** das Rastelement (15) als federbelasteter Schließmechanismus ausgeführt ist.

10. Vorrichtung nach Anspruch 9,
**dadurch gekennzeichnet, dass** das Rastelement (15) eine Bedienungshandhabe aufweist.

11. Vorrichtung nach Anspruch 10,
**dadurch gekennzeichnet, dass** die Bedienungshandhabe aus einem gelenkig am Rastelement (15) angeordneten Ring (20) besteht.

## Claims

1. Device for connecting free pipe or hose ends (2, 22) fitted with flanges, with a plurality of clip segments (3A, 3B, 3C, 3D) connected to one another in jointed fashion with an essentially U-shaped cross-section, a clamping lever (4) arranged in jointed fashion on the end side at a free end of a clip segment (3A), and at least one spring (5), wherein the clip segments (3A, 3B, 3C, 3D) engage from outside over the flanges of the pipe or hose ends (2, 22) pushed together, and wherein the free ends of the first and last clip segment (3A and 3D) can be locked by means of clamping lever (4) and spring/s (5),
**characterised in that**
the clamping lever (4) can be connected in positive fit in the area of its jointed connection to the free end of the adjacent clip segment (3D), and **in that** the clamping lever can be locked in the tensioned position.

2. Device according to Claim 1,
**characterised in that**
the clip segments (3A, 3B, 3C, 3D) and the clamping lever (4) are made of sheet steel parts, and **in that** the clamping lever is designed as hook shaped in the area of its jointed connection to the clip segment (3A) and can be hooked to the corresponding projections of the free end of the adjacent clip segment (3D).

3. Device according to Claim 2,
**characterised in that**
the projections are formed from the ends of a bolt (12), which is mounted in two holes in the side parts of the free end of the clip segment (3D).

4. Device according to Claim 3,
**characterised in that**
the bolt (12) is secured against axial movement.

5. Device according to Claim 3 or 4,
**characterised in that**
the bolt (12) has at least one groove (13) and is connected in the area of the groove (13) in positive fit to the clip segment (3D).

6. Device according to Claims 3 and 5,
**characterised in that**
a tube (14) is arranged between the holes in the clip segment (3D), which is as long as the clear distance between the holes and which in the area of the groove (13) of the bolt (12) is pressed onto the bolt (12) by crimping.

7. Device according to any one of Claims 1 to 6,
**characterised in that**
the clamping lever (4) has a movable engagement element (15) at its free end, which in the tensioned state of the clamping lever (4) is connected in positive fit to the clip segment (3A).

8. Device according to Claim 7,
**characterised in that**
a trunnion (18) is curved out of the clip segment (3A), which has an undercut or a hole (19) to accommodate the engagement element (15).

9. Device according to Claim 7 or 8,
**characterised in that**
the engagement element (15) is designed as a spring-loaded closure mechanism.

10. Device according to Claim 9,
**characterised in that**
the engagement element (15) shows an operating handle.

11. Device according to Claim 10,
**characterised in that**
the operating handle consists of a ring (20) arranged in jointed fashion at the engagement element (15).

## Revendications

1. Dispositif pour la raccordement des extrémités libres de tubes ou de tuyaux (2, 22) pourvues de flasques, avec plusieurs segments de collier (3A, 3B, 3C, 3D) de section transversale sensiblement en forme de U, reliés ensemble de manière articulée, un levier de serrage (4), agencé de manière articulée à une extrémité libre d'un segment de collier (3A), et au moins un ressort (5), les segments de collier (3A, 3B, 3C, 3D) s'accrochant, de l'extérieur, sur les flasques des extrémités de tubes ou de tuyaux (2, 22) emboîtées, et les extrémités libres du premier segment et du dernier segment de collier (3A et 3D) pouvant être verrouillées au moyen du levier de serrage (4) et du /des ressort/s (5)**, caractérisé en ce que** le levier de serrage (4) peut être raccordé par emboîtement, dans la région de son raccord articulé, à l'extrémité libre du segment de collier (3D) voisin, et **en ce que** le levier de serrage peut être encliqueté en position de serrage.

2. Dispositif selon la revendication 1, **caractérisé en ce que** les segments de collier (3A, 3B, 3C, 3D) et le levier de serrage (4) sont fabriqués avec des pièces en tôle d'acier, et que le levier de serrage, est configuré en forme de crochet, dans la région de son raccordement articulée au segment de collier (3A), et peut s'accrocher à des saillies correspondantes de l'extrémité libre du segment de collier (3D) voisin.

3. Dispositif selon la revendication 2, **caractérisé en ce que** les saillies sont formées par les extrémités d'un boulon (12), qui est monté dans deux alésages, dans les parties latérales de l'extrémité libre du segment de collier (3D).

4. Dispositif selon la revendication 3, **caractérisé en ce que** le boulon (12) est protégé contre un mouvement axial.

5. Dispositif selon revendication 3 ou 4**, caractérisé en ce que** le boulon (12) présente au moins une zone dépouillée (13) et est reliée par emboitement au segment de collier (3D) dans la région de la zone dépouillée (13).

6. Dispositif selon les revendications 3 et 5, **caractérisé en ce que**, entre les alésages du segment de collier (3D), est disposé un tube (14), qui est aussi long que l'intervalle libre entre les alésages, et qui est pressé par écrasement contre le boulon (12), dans la région de la zone dépouillée (13) du boulon (12).

7. Dispositif selon l'une des revendications 1 à 6, **caractérisé en ce que** le levier de serrage (4) présente, à son extrémité libre, un élément d'arrêt (15) déplaçable, qui, à l'état serré du levier de serrage (4), est relié par emboitement au segment de collier (3A).

8. Dispositif selon la revendication 7, **caractérisé en ce qu'**un ergot (18), qui présente une contre-dépouille ou un alésage (19) pour la réception de l'élément d'arrêt (15), est formé en étant coudé à partir du segment de collier (3A).

9. Dispositif selon revendication 7 ou 8, **caractérisé en ce que** l'élément d'arrêt (15) est exécuté en tant que mécanisme de fermeture commandé par ressort.

10. Dispositif selon la revendication 9, **caractérisé en ce que** l'élément d'arrêt (15) présente une poignée de manoeuvre.

11. Dispositif selon la revendication 10, **caractérisé en ce que** la poignée de manoeuvre est constituée par un anneau (20) articulé sur l'élément d'arrêt (15).
